# EUROPÄISCHE PATENTSCHRIFT

(11) **EP 1 426 533 B1**
(45) Veröffentlichungstag und Bekanntmachung des Hinweises auf die Patenterteilung: **12.11.2014**
(21) Anmeldenummer: 03018882.5
(22) Anmeldetag: 20.08.2003
(51) Int. Cl.: E05D 5/02, E05B 3/00

(54) **Vorrichtung zur Befestigung von Beschlagteilen an Mehrkammerprofilen**
Device for fixing fittings to multiple chamber profiles
Dispositif de fixation de ferrures sur des profilés à chambres

(30) Priorität: 03.12.2002 DE 20218699 U
(43) Veröffentlichungstag der Anmeldung: 09.06.2004
(73) Patentinhaber: fischerwerke GmbH & Co. KG, 72178 Waldachtal (DE); Dr. Hahn GmbH & Co. KG, D-41189 Mönchengladbach (DE)
(72) Erfinder: Frischmann, Albert, 79341 Kenzingen (DE); Manz, Thomas, 79336 Herbolzheim (DE)

(56) Entgegenhaltungen:
- EP-A- 0 864 767
- WO-A-02/38897
- DE-A- 3 932 193
- DE-A- 10 000 226
- DE-A- 10 033 840
- DE-A- 10 131 340

## Beschreibung

Die Erfindung betrifft eine Vorrichtung mit einem Beschlagteil, einer Montageschraube und einer Befestigungsschraube zur Befestigung des Beschlagteils an Mehrkammerprofilen mit den Merkmalen des Oberbegriffs des Anspruchs 1.

Derartige Vorrichtungen sind beispielsweise aus der DE 100 00 226 bekannt. Die bekannte Vorrichtung, die beispielsweise der Befestigung von Türgriffen dient, weist eine hülsenförmige Montageschraube auf, die in einem Bohrloch mittels eines Außengewindes in einem Mehrkammerprofil, beispielsweise einer Tür oder dgl., befestigt ist. Am Einführende der Montageschraube ist ein Positionierelement mit einem Innengewinde vorgesehen. Das Positionierelement ist relativ zur Montageschraube in radialer Richtung bezüglich der Längsachse der Montageschraube beweglich. Ein Gewindebolzen wird in das Innengewinde des Positionierelements geschraubt und gegen das entgegengesetzte Ende der Montageschraube verkontert. Er dient der eigentlichen Befestigung des Beschlagteils. So schlägt die Erfindung beispielsweise vor, einen Türgriff an dem Gewindebolzen mittels eines Sicherungsstiftes durch eine Querbohrung des Haltebolzens als Haltemittel zu befestigen. Des Weiteren schlägt die Erfindung vor, dass das Außengewinde der Montageschraube als selbstschneidendes Gewinde ausgeführt wird, so dass lediglich ein Loch ohne Gewinde vorgebohrt werden muss. Die Montageschraube kann somit mit dem Einführende in das Bohrloch eingesetzt werden und kann dann eingeschraubt werden. Dazu weist die Montageschraube Montageangriffsflächen auf, beispielsweise einen Innensechskant, sowie einen Anschlagbund, der die Einschraubtiefe begrenzt und die Montageschraube gegen das Mehrkammerprofil verkontert.

Im Gegensatz zu Vorrichtungen, bei denen die Befestigung durch ein Verspreizen der Montageschraube realisiert wird, treten bei der Montage kaum axiale Kräfte auf. Dies ist von Vorteil, wenn zwischen den der Verankerung dienenden Wänden des Mehrkammerprofils eine thermische Isolierung angeordnet ist, die sich im Falle von Axialkräften deformieren würde. Allerdings weist die bekannte Vorrichtung den Nachteil auf, dass Querkräfte am Beschlagteil einerseits über Reibkräfte an den Konterflächen zwischen Gewindebolzen und Montageschraube und andererseits über das am Einführende angeordnete Innengewinde des Positionierelements in die Montageschraube und von dort in das Mehrkammerprofil eingeleitet werden. Durch diesen ungünstigen Kraftverlauf kann es leicht zu Verschiebungen des Beschlagteils gegenüber dem Mehrkammerprofil kommen.

Der Erfindung liegt daher die Aufgabe zugrunde, eine Befestigungsvorrichtung zu schaffen, die hohe Querkraftaufnahme, eine zuverlässige Sicherung gegen Verschieben sowie eine einfache Montage gewährleistet.

Diese Aufgabe wird erfindungsgemäß durch die Merkmale des Anspruchs 1 gelöst. Der Anlagebund weist einen äußeren Umfang auf, der zentrierend in eine Bohrung des Beschlagteils eingreift, wodurch eine direkte Verbindung von Beschlagteil und Montageschraube erreicht wird und Querkräfte am Beschlagteil direkt und formschlüssig in das Mehrkammerprofil eingeleitet werden. Vorzugsweise weist der Anlagebund an seinem äußere Umfang eine Zahnung auf. Diese Zahnung greift wiederum zentrierend in eine Bohrung des Beschlagteils ein. Vorzugsweise sind der Kopfkreisdurchmesser der Zahnung am Anlagebund größer und der Fußkreisdurchmesser der Zahnung kleiner als der Durchmesser der Bohrung des Beschlagteils ausgeführt. Bei der Montage graben sich die Zahne in die Wandung der Bohrung im Beschlagteil ein. Hierdurch wird neben der Zentrierung eine formschlüssige Übertragung von Torsionsmomenten erreicht. Sowohl eine Verschiebung in radialer Richtung als auch ein Verdrehen des Beschlagteils gegenüber der Montageschraube wird damit auch bei hohen Querkräften ausgeschlossen.

Im Sinne dieses verbesserten Kraftverlaufs sieht eine bevorzugte Ausführung der Erfindung vor, dass das Innengewinde der Montageschraube zur Aufnahme von Kräften an der Befestigungsschraube im hinteren Ende der Montageschraube in Bezug auf deren Einbringrichtung angeordnet ist.

Eine bevorzugte Ausführung der Montageschraube weist ein Außengewinde auf, dessen Kerndurchmesser in Einbringrichtung beispielsweise konisch abnimmt. Dabei bleibt die Flankenhöhe konstant. Im Gegensatz zu der bekannten Vorrichtung wird das Gewinde damit nicht in die Wände des Mehrkammerprofils eingeschnitten, sondern umformend eingeprägt. Dies bewirkt eine Kaltverfestigung beim Umformen ohne Faserunterbrechung und damit deutlich höhere Haltewerte.

Vorzugsweise ist das Außengewinde als mehrgängiges Feingewinde ausgebildet. Wie Versuche gezeigt haben, bewirkt die Ausführung als Feingewinde eine Steigerung der Haltewerte gegenüber einem Normalgewinde. Durch die Mehrgängigkeit wird gewährleistet, dass es bei beginnender Einprägung der Flanken nicht zu einer radialen Verschiebung der Montageschraube gegenüber dem Bohrloch aufgrund der Passivkräfte kommt.

In einer bevorzugten Ausführungsform ist das Außengewinde der Montageschraube bis zum Anschlagbund ausgebildet. Hierdurch wird gewährleistet, dass auch der Außenwand des Mehrkammerprofils tragende Wirkung zukommt. Dies erhöht gegenüber einem Gewindeauslauf sowohl die Haltekräfte als auch die Fähigkeit zur Aufnahme von Querkräften ohne radiale Verschiebung.

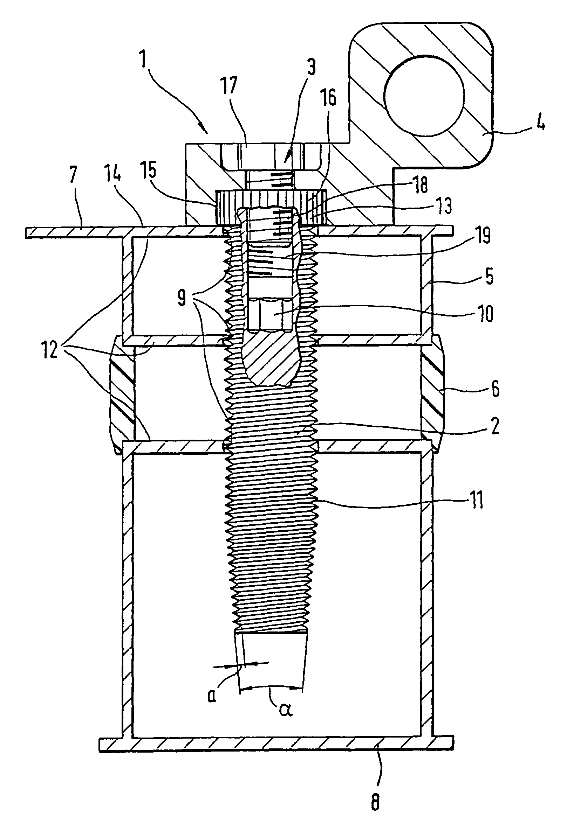

Die Erfindung wird nachfolgend anhand eines in der Zeichnung dargestellten Ausführungsbeispiels näher erläutert. Figur 1 zeigt eine Schnittzeichnung einer erfindungsgemäßen Vorrichtung im eingebauten Zustand. Die Vorrichtung 1 besteht aus einer Montageschraube 2 und einer Befestigungsschraube 3. Sie dient der Befestigung des Beschlagteils 4 an dem Mehrkammerprofil 5. Das Mehrkammerprofil 5 weist eine thermische Isolierung 6 aus Kunststoff auf, wodurch ein Wärmefluss beispielsweise von der Vorderseite 7 zur Rückseite 8 reduziert wird. Bei der Montage der Vorrichtung 1 wird zunächst das Bohrloch 9 in das Mehrkammerprofil 5 eingebracht. Die Montageschraube 2 wird in dieses Bohrloch 9 eingeschraubt. Dazu weist die Montageschraube 2 als Innensechskant ausgeprägte Montageangriffsflächen 10 auf. Das Außengewinde 11 der Montageschraube 2 prägt sich beim Einschrauben in die Wände 12 des Mehrkammerprofils 5 ein. Dazu weist das Außengewinde 11 einen in Einbringrichtung sich konisch mit dem Konuswinkel *a* verjüngenden Kerndurchmesser auf. Die Flankenhöhe a ist über die gesamte Länge des Außengewindes 11 konstant. Hierdurch wird erreicht, dass sich das Außengewinde 11 nicht spanabhebend in die Wände 12 des Mehrkammerprofils 5 schneidet, sondern es lediglich zu einem Umformvorgang kommt. Hierdurch wird das Material verfestigt, was sich günstig auf die Haltewerte der Vorrichtung 1 auswirkt. Das Außengewinde 11 ist bis zum Anlagebund 13 ausgeprägt, so dass es auch in der Außenwand 14 Halt findet. Durch die Ausprägung des Außengewindes als dreigängiges Feingewinde werden sowohl hohe Haltewerte als auch eine gute Zentrierung im Bohrloch 9 erreicht.

Nach dem Einschrauben der Montageschraube 2 wird das Beschlagteil 4 mit seiner Bohrung 15 über den Anlagebund 13 gestülpt. Der Anlagebund 13 weist eine Zahnung 16 auf, dessen Kopfkreisdurchmesser größer und dessen Fußkreisdurchmesser kleiner als der Durchmesser der Bohrung 15 ist. Hierdurch kommt es beim Überstülpen zu einem Eingraben der Zahnung 16 in die Bohrung 15. Dies gewährleistet einerseits eine Zentrierung des Beschlagteils 4 und andererseits eine formschlüssige, direkte Übertragung von Querkräften und Torsionsmomenten des Beschlagteils 4 auf die Montageschraube 2. Axiale Zugkräfte werden durch die abschließend montierte Befestigungsschraube 3 über deren Schraubenkopf 17 als Haltemittel und das Bolzengewinde 18 in das Innengewinde 19 der Montageschraube 2 übertragen. Eine derartige Anordnung gewährleistet eine optimale Einleitung sämtlicher Kräfte und Momente in das Mehrkammerprofil 5.

## Patentansprüche

1. Vorrichtung (1) mit einem Beschlagteil (4), einer Montageschraube (2) und einer Befestigungsschraube (3) zur Befestigung des Beschlagteils (4) an einem Mehrkammerprofil (5), wobei die Montageschraube (2) ein Außengewinde (11), einen in Einbringrichtung am hinteren Ende angeordneten Anlagebund (13), ein Innengewinde (19) und Montageangriffsflächen (10) aufweist, und wobei die Befestigungsschraube (3) in das Innengewinde (19) der Montageschraube (2) einschraubbar ist, **dadurch gekennzeichnet, dass** der Anlagebund (13) einen äußeren Umfang (16) aufweist, der zentrierend in eine Bohrung (15) des Beschlagteils (4) eingreift, wodurch eine direkte Verbindung vom Beschlagteil (4) und der Montageschraube (2) erreicht wird und Querkräfte am Beschlagteil (4) direkt und formschlüssig in das Mehrkammerprofil (5) eingeleitet werden.

2. Vorrichtung nach Anspruch 1, **dadurch gekennzeichnet, dass** der Umfang (16) des Anlagebundes (13) eine Zahnung (16) aufweist.

3. Vorrichtung nach Anspruch 2, **dadurch gekennzeichnet, dass** der Kopfkreisdurchmesser der Zahnung (16) am Anlagebund (13) größer und Fußkreisdurchmesser der Zahnung (16) kleiner als der Durchmesser der Bohrung (15) des Beschlagteils (4) ist.

4. Vorrichtung nach Anspruch 1, **dadurch gekennzeichnet, dass** das Innengewinde (19) in Einbringrichtung hinten in der Montageschraube (2) angeordnet ist.

5. Vorrichtung nach Anspruch 1, **dadurch gekennzeichnet, dass** der Kerndurchmesser des Außengewindes (11) an der Montageschraube (2) bei gleichbleibender Flankenhöhe (a) in Einbringrichtung der Montageschraube (2) abnimmt.

6. Vorrichtung nach Anspruch 1, **dadurch gekennzeichnet, dass** das Außengewinde (11) der Montageschraube (2) als Feingewinde ausgebildet ist.

7. Vorrichtung nach Anspruch 1, **dadurch gekennzeichnet, dass** das Außengewinde (11) der Montageschraube (2) als mehrgängiges Gewinde ausgebildet ist.

8. Vorrichtung nach Anspruch 1, **dadurch gekennzeichnet, dass** das Außengewinde (11) der Montageschraube (2) bis zum Anlagebund (13) ausgebildet ist.

## Claims

1. Apparatus (1) having a fitting (4), a mounting screw (2) and a fixing screw (3), for fixing the fitting (4) to a multi-chamber profiled section (5), wherein the mounting screw (2) has an external thread (11), an abutting collar (13) arranged at the rear end in the insertion direction, an internal thread (19) and installation engagement surfaces (10), and wherein the fixing screw (3) is arranged to be screwed into the internal thread (19) of the mounting screw (2), **characterised in that** the abutting collar (13) has an outer periphery (16) which engages in a hole (15) in the fitting (4) so as to centre it, as a result of which a direct connection between the fitting (4) and the mounting screw (2) is achieved and transverse forces on the fitting (4) are passed into the multi-chamber profiled section (5) directly and by way of an interlocking connection.

2. Apparatus according to claim 1, **characterised in that** the periphery (16) of the abutting collar (13) has a toothed arrangement (16).

3. Apparatus according to claim 2, **characterised in that** the tip diameter of the toothed arrangement (16) on the abutting collar (13) is larger than the diameter of the hole (15) in the fitting (4) and the root diameter of the toothed arrangement (16) is smaller.

4. Apparatus according to claim 1, **characterised in that** the internal thread (19) is arranged in the rear of the mounting screw (2) in the insertion direction.

5. Apparatus according to claim 1, **characterised in that** the core diameter of the external thread (11) on the mounting screw (2) decreases in the insertion direction of the mounting screw (2) whilst the flank height (a) remains the same.

6. Apparatus according to claim 1, **characterised in that** the external thread (11) of the mounting screw (2) is in the form of a fine thread.

7. Apparatus according to claim 1, **characterised in that** the external thread (11) of the mounting screw (2) is in the form of a multi-start thread.

8. Apparatus according to claim 1, **characterised in that** the external thread (11) of the mounting screw (2) is formed as far as the abutting collar (13).

## Revendications

1. Dispositif (1) comprenant une pièce de ferrure (4), une vis de montage (2) et une vis de fixation (3), en vue de fixer ladite pièce de ferrure (4) à un profilé (5) à chambres multiples, ladite vis de montage (2) incluant un filetage extérieur (11), un collet d'appui (13) disposé à l'extrémité postérieure dans la direction d'insertion, un filetage intérieur (19) et des surfaces (10) offrant prise de montage, et ladite vis de fixation (3) pouvant être vissée dans le filetage intérieur (19) de ladite vis de montage (2), **caractérisé par le fait que** le collet d'appui (13) présente un pourtour extérieur (16) pénétrant dans un alésage (15) de la pièce de ferrure (4), avec effet de centrage, de sorte qu'une liaison directe est obtenue entre ladite pièce de ferrure (4) et la vis de montage (2), et que des forces transversales appliquées à ladite pièce de ferrure (4) sont introduites dans le profilé (5) à chambres multiples, en mode direct et par complémentarité de formes.

2. Dispositif selon la revendication 1, **caractérisé par le fait que** le pourtour (16) du collet d'appui (13) est muni d'une denture (16).

3. Dispositif selon la revendication 2, **caractérisé par le fait que** le diamètre de tête de la denture (16) ménagée sur le collet d'appui (13), et le diamètre de pied de ladite denture (16), sont respectivement supérieur et inférieur au diamètre de l'alésage (15) de la pièce de ferrure (4).

4. Dispositif selon la revendication 1, **caractérisé par le fait que** le filetage intérieur (19) occupe, dans la vis de montage (2), un emplacement postérieur dans la direction d'insertion.

5. Dispositif selon la revendication 1, **caractérisé par le fait que** le diamètre du noyau du filetage extérieur (11) façonné sur la vis de montage (2) décroît, dans la direction d'insertion de ladite vis de montage (2), moyennant une hauteur de flancs (a) constante.

6. Dispositif selon la revendication 1, **caractérisé par le fait que** le filetage extérieur (11) de la vis de montage (2) est conçu comme un filetage fin.

7. Dispositif selon la revendication 1, **caractérisé par le fait que** le filetage extérieur (11) de la vis de montage (2) est conçu comme un filetage à pas multiples.

8. Dispositif selon la revendication 1, **caractérisé par le fait que** le filetage extérieur (11) de la vis de montage (2) est façonné jusqu'au collet d'appui (13).
